# EUROPEAN PATENT APPLICATION

(11) **EP 3 978 870 A1**
(43) Date of publication of application: **06.04.2022**
(21) Application number: 20814952.6
(22) Date of filing: 22.04.2020
(51) Int. Cl.: G01C 3/06, G06T 7/00, G06T 7/13, G06T 7/70

(54) **PILLAR DETECTION DEVICE AND PILLAR DETECTION METHOD**

(30) Priority: 31.05.2019 JP 2019102581
(71) Applicant: Faurecia Clarion Electronics Co., Ltd., Saitama-shi, Saitama 330-0081 (JP)
(72) Inventor: YAO, Zhipeng, Saitama-shi, Saitama 330-0081 (JP); FUKUDA, Daisuke, Saitama-shi, Saitama 330-0081 (JP); RI, Yongdok, Saitama-shi, Saitama 330-0081 (JP)
(74) Representative: Lavoix
(86) International application number: PCT/JP2020/017275
(87) International publication number: WO 2020/241125

(57) **Abstract**

To provide a pillar detection device and a pillar detection method capable of specifying a positional relationship with a vehicle, a camera ECU (30) (pillar detection device) includes a longitudinal edge detection portion (34) configured to detect a longitudinal edge (12) in a first target image (P1) captured at time-serially different timing, a tracking point set portion (35) configured to set a plurality of tracking points arranged along the vertical direction to a longitudinal edge (12), a corresponding point detection portion (36) configured to detect corresponding points (12a') corresponding to the tracking points (12a), a longitudinal edge specifying portion (37) configured to specify a longitudinal edge in which the corresponding points (12a) are arranged in the vertical direction, and a pillar position detection portion (40) configured to detect a position of a pillar (61) having the longitudinal edge (12) based on each of the coordinate positions of intersection points (12d), (12d') corresponding in the target images (PI), (P2) and the position of the vehicle when each of the target images (PI), (P2) is captured.

## Description

### TECHNICAL FIELD

This disclosure relates to a pillar detection device and a pillar detection method.

### BACKGROUND ART

It is proposed to assist driving and parking of a vehicle based on an image captured by a camera that is mounted on the vehicle to capture the surrounding of the vehicle. In this case, it is necessary to detect a specific feature point in the image by an image process. The feature point includes a corner point of a white broken line dividing a traveling lane drawn on a traveling load and a corner point of a white line of a parking frame *(see* e.g., Patent Literature 1).

### CITATION LIST

### Patent Literature

Patent Literature 1: JP2018-032253A

### SUMMARY

### Technical Problem

However, a pillar that is provided in a parking lot inside a building, a roofed garage, and the like, and extends in a vertical direction from a floor does not have the above-described corner point. For this reason, such a pillar is not detected as a feature point.

For example, an intersection point of the pillar and the floor and an intersection point of the pillar and the celling may be detected as a corner point in an image captured from a distance. However, when the vehicle is close to the pillar, the floor and the celling are outside the capturing range of the camera, so that the feature point cannot be detected.

The present disclosure has been made in view of the above circumferences, and an object of the present disclosure is to provide a pillar detection device and a pillar detection method capable of specifying a positional relationship between a vehicle and a pillar even though a corner portion of the pillar cannot be detected.

The pillar in the technical problem of the present disclosure includes not only a column but also a vertical wall extending in the vertical direction.

### Solution to Problem

The present disclosure firstly provides a pillar detection device including a vehicle position acquisition portion configured to acquire a position of a vehicle, a cylindrical distortion correction portion configured to convert an image captured by a camera mounted on the vehicle into a cylindrical surface image acquired assuming that the image is projected onto a cylindrical surface extending in a vertical direction, a longitudinal edge detection portion configured to detect a longitudinal edge extending in the vertical direction based on the cylindrical surface image, a tracking point set portion configured to set a plurality of tracking points arranged along the vertical direction to a longitudinal edge detected by the longitudinal edge detection portion, a corresponding point detection portion configured to detect, between two images of a first image and a second image captured at time-serially different times by the camera, corresponding points in the cylindrical surface image of the second image, which correspond to the plurality of tracking points set by the tracking point set portion in the cylindrical surface image of the first image, a longitudinal edge specifying portion configured to specify a longitudinal edge in the cylindrical surface image of the second image in which the corresponding points detected by the corresponding point detection portion are arranged in the vertical direction, and a pillar position detection portion configured to acquire a grounding position of a pillar having the longitudinal edge based on the longitudinal edge detected in the cylindrical surface image of the first image, the longitudinal edge specified in the cylindrical surface image of the second image, and each position of the vehicle when each of the two images is captured.

The present disclosure secondary provides a pillar detection method includes acquiring a position of a vehicle, converting an image captured by a camera mounted on the vehicle into a cylindrical surface image acquired assuming that the image is projected onto a cylindrical surface extending in a vertical direction, detecting a longitudinal edge extending in the vertical direction based on the cylindrical surface image, setting a plurality of tracking points arranged along the vertical direction to the longitudinal edge, detecting, between two images of a first image and a second image captured at time-serially different times by the camera, corresponding points in the cylindrical surface image of the second image, which correspond to the plurality of tracking points set in the cylindrical surface image of the first image, specifying a longitudinal edge in the cylindrical surface image of the second image in which the corresponding points are arranged in the vertical direction, and acquiring a grounding position of a pillar having the longitudinal edge based on the longitudinal edge detected in the cylindrical surface image of the first image, the longitudinal edge specified in the cylindrical surface image of the second image, and each position of the vehicle when each of the two images is captured.

### Advantageous Effects

According to the pillar detection device and the pillar detection method of the present disclosure, the positional relationship between the vehicle and the pillar can be specified even though the corner portion of the pillar cannot be detected.

### BRIEF DESCRIPTION OF DRAWINGS

FIG. 1 is a block diagram illustrating a pillar detection system including a camera electronic control unit (ECU) as an example of the present disclosure.
FIG. 2 is a view illustrating an example (cylindrical surface image p1) of a cylindrical surface image p acquired by correcting an image pa with a cylindrical distortion correction portion.
FIG. 3 is a view illustrating an example of a target image P1 of the cylindrical surface image p1, the target image P1 including a rectangular range R having a predetermined vertical length with a center in a longitudinal direction.
FIG. 4 is a view illustrating longitudinal edges detected in the target image P1.
FIG. 5 is a graph showing an accumulated value I of signal values of pixels along a y direction (longitudinal direction) for each detected longitudinal edge.
FIG. 6 is a view illustrating extracted longitudinal edges to which tracking points are set at equal intervals along the longitudinal direction.
FIG. 7 is a schematic view illustrating another target image (e.g., present image time-serially newer than target image when target image is past image) captured by a camera at a time time-serially different from that of the target image to which the tracking points are set by a tracking point set portion.
FIG. 8 is a view illustrating the two target images PI, P2 overlapped to each other, the target image P1 with a broken line and the target image P2 with a solid line.
FIG. 9 is a schematic view illustrating intersection points of a height H of the camera and respective longitudinal edges in the target images PI, P2 illustrated in FIG. 8.
FIG. 10 is a flowchart describing a process flow of the camera ECU.

### DESCRIPTION OF EMBODIMENTS

Hereinafter, a specific embodiment of a pillar detection device and a pillar detection method according to the present disclosure will be described with reference to the drawings.

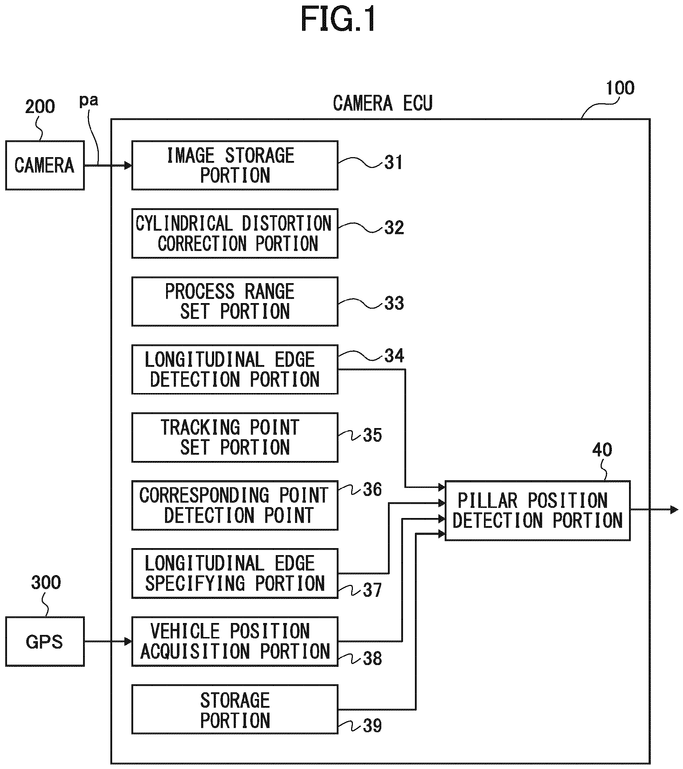

A configuration will be described. FIG. 1 is a block diagram illustrating a pillar detection system including a camera ECU 100 as an example of the present disclosure.

The camera ECU 100 illustrated in FIG. 1 is an embodiment of a pillar detection device according to the present disclosure and an operation of the camera ECU 100 is an embodiment of a pillar detection method according to the present disclosure.

An image pa processed by the camera ECU 100 is an image captured by a camera 200 mounted on a vehicle. The camera 200 is mounted on the vehicle at a predetermined height H. The camera 200 includes a wide-angle lens having about 180° of an angle of view. The image pa captured by the camera 200 is thus an image having a distorted circumference portion.

The camera 200 is mounted to have its optical axis in the horizontal direction. Thereby, among the images pa captured by the camera 200, an image of a subject at the same height H as the optical axis of the camera 200 is captured on the horizontal line passing the center (corresponding to optical axis) of the image pa.

The camera ECU 100 includes an image storage portion 31, a cylindrical distortion correction portion 32, a process range set portion 33, a longitudinal edge detection portion 34, a tracking point set portion 35, a corresponding point detection portion 36, a longitudinal edge specifying portion 37, a vehicle position acquisition portion 38, and a storage portion 39.

The image storage portion 31 stores the images pa captured by the camera 200 at predetermined time intervals. The cylindrical distortion correction portion 32 reads the image pa stored in the image storage portion 31 captured by the camera 200 to be converted into a cylindrical surface image p acquired assuming that the image is projected onto the cylindrical surface extending in the vertical direction in a real space.

The cylindrical distortion correction portion 32 stores a parameter for converting the image pa into the cylindrical surface image p. This parameter is previously obtained based on optical data of a lens or the like provided in the above-described camera 200.

The image pa is an image having a distorted portion apart from the center. However, the cylindrical distortion correction portion 32 converts the distorted image pa such that the subject extending in the vertical direction in the real space becomes the image (cylindrical surface image p) extending in the vertical direction (longitudinal direction). A pillar which is a subject extending in the vertical direction in the real space thereby becomes an image extending straight in the longitudinal direction in the cylindrical surface image p.

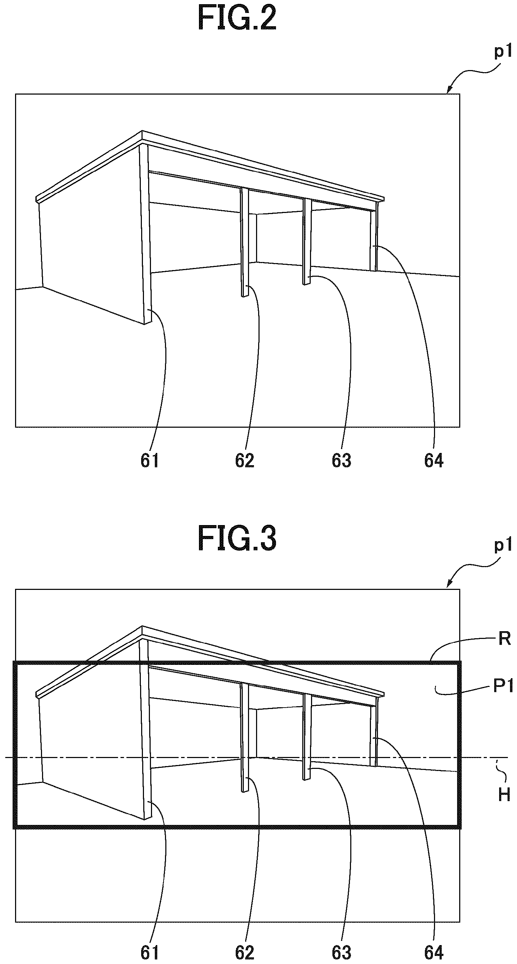

FIG. 2 is an example of the cylindrical surface image p acquired by correcting the image pa with the cylindrical distortion correction portion 32. The cylindrical distortion correction portion 32 converts the image pa into the cylindrical surface image p1, as illustrated in FIG. 2.

The process range set portion 33 sets a part of the cylindrical surface image p acquired by correcting with the cylindrical distortion correction portion 32 as the target image P of a process target. The part of the cylindrical surface image p has a predetermined range in the vertical direction. More specifically, the process range set portion 33 sets a rectangular range of the cylindrical surface image p as the target image P. The rectangular range has a predetermined vertical length with the center in the longitudinal direction.

FIG. 3 is an example of the target image P1 of the cylindrical surface image p1. The target image P1 includes the rectangular range R having a predetermined vertical length with the center in the longitudinal direction. As illustrated in FIG. 3, the process range set portion 33 converts the target image P1 of the cylindrical surface image p1, which includes the rectangular range R having a predetermined vertical length with the center in the longitudinal direction, into the target image P1.

As the process range set portion 33 narrows the cylindrical surface image p1 to be the target image PI, the target of the after-described process that is executed to the image by the camera ECU 100 can be downsized, and thus the process load can be reduced.

Note that the center of the cylindrical surface image p1 in the longitudinal direction in FIG. 3 has the image of the subject at the height H of the camera 200.

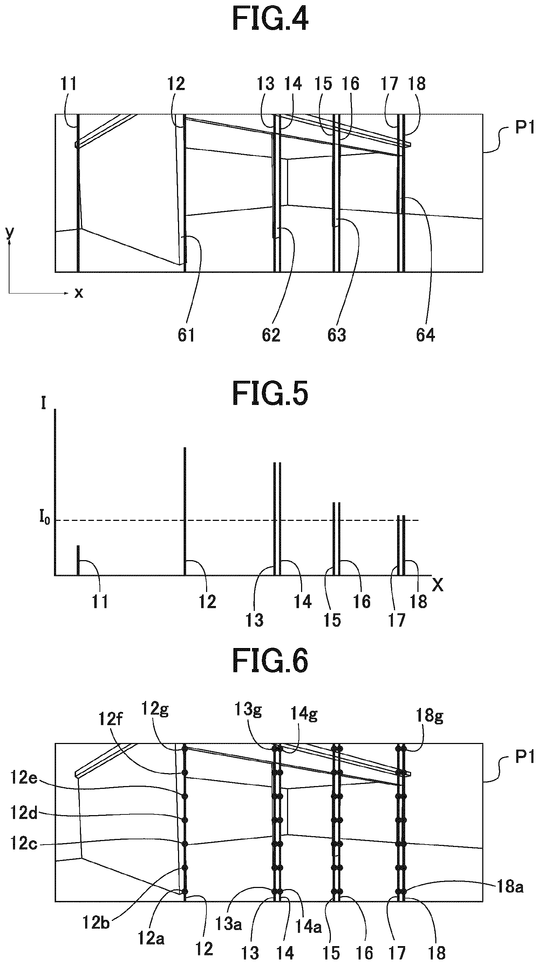

FIG. 4 is a view illustrating longitudinal edges 11, 12, ...18 detected in the target image P1. As illustrated in FIG. 4, the longitudinal edge detection portion 34 detects the longitudinal edges 11, 12, ... 18 in the target image P1. Each of the longitudinal edges 11, 12, ... 18 extends in the vertical direction in the real space. The longitudinal edges 11, 12, ... 18 mainly correspond to side edges of pillars 61, 62, 63, 64 extending in the longitudinal direction.

The detection process of the longitudinal edge 11 or the like by the longitudinal edge detection portion 34 is a known process of detecting a portion of the target image P1 in which a signal value of a pixel constituting the target image P1 drastically changes as an edge by vertically scanning the target image P1 in the y direction of the longitudinal direction while horizontally scanning the target image P1 in the x direction of the transverse direction in FIG. 4.

In addition, the longitudinal edge detection portion 34 detects the longitudinal edge 11 or the like including the longitudinal edge portion actually presenting in the target image P1 illustrated in FIG. 4 the extended lines (not longitudinal edge portion as image) of the longitudinal edge portion extending to the upper and lower ends of the target image P1.

The longitudinal edge detection portion 34 detects, for example, eight longitudinal edges 11, 12, ..., 18 (including extended line) as illustrated in FIG. 4. However, as a longitudinal edge portion (longitudinal edge actually presenting as image) having a short length in the longitudinal direction, for example, the longitudinal edge 11 is far from the vehicle in the target image PI, such a longitudinal edge portion may be a small edge captured as an image. It is thus unnecessary for the longitudinal edge detection portion 34 to detect such the longitudinal edge portion as a pillar close to the vehicle.

In order to set only the longitudinal edge of the detected longitudinal edges 11, 12, ... 18, which has a certain length in the longitudinal direction, as a target of a subsequent process, the longitudinal edge detection portion 34 accumulates, with respect to each longitudinal edge 11, 12, ... 18, the signal value of the pixel on each of the detected longitudinal edges 11, 12, ... 18, and extracts only the longitudinal edge of which the accumulated value exceeds a previously set threshold as an actually long longitudinal edge portion and does not extract the longitudinal edge of which the accumulated value does not exceed the threshold.

FIG. 5 is a graph showing an accumulated value I of a signal value of a pixel along the y direction (longitudinal direction) with respect to each of the detected longitudinal edges 11, 12, ... 18. More specifically, as illustrated in FIG. 5, the longitudinal edge detection portion 34 stores a previously set threshold Io, and extracts seven longitudinal edges 12, ..., 18 of which the accumulated value I exceeds the threshold Io as the longitudinal edge and does not extract the longitudinal edge 11 of which the accumulated value I does not exceed the threshold Io as the longitudinal edge.

The threshold Io is a value set to reduce the number of longitudinal edges as the target of the subsequent process. However, all of the detected longitudinal edges may be set as the targets of the subsequent process. Accordingly, it may be unnecessary for the longitudinal edge detection portion 34 to extract the detected longitudinal edge based on the comparison with the threshold Io.

FIG. 6 is a view illustrating the extracted longitudinal edges 12 to 18 to which tracking points 12a, 12b, ..., 12g are set at equal intervals along the longitudinal direction. As illustrated in FIG. 6, the tracking point set portion 35 sets the tracking points 12a, 12b, ..., 12g at equal intervals along the longitudinal direction to the extracted longitudinal edge 12. The tracking point set portion 35 sets the same seven tracking points 13c, etc., to each of the longitudinal edges 13 to 18 at equal intervals similar to the longitudinal edge 12. In addition, a plurality of tracking points set by the tracking point set portion 35 may be set at equal intervals as long as they are arranged along the longitudinal direction.

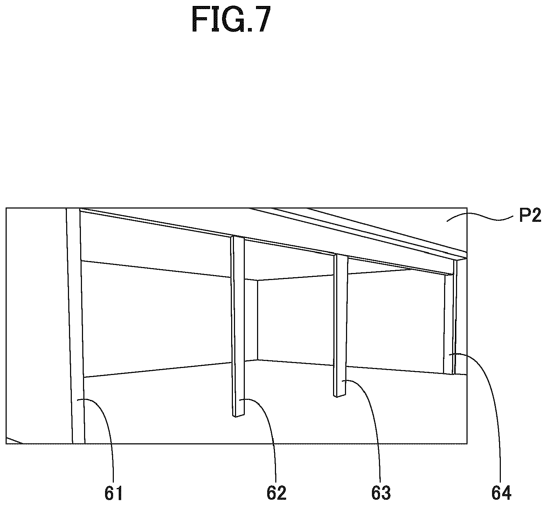

FIG. 7 is a schematic view illustrating another target image P2 (e.g., present image time-serially newer than target image P1 when target image P1 is past image) captured at a time time-serially different from the target image P1 to which the tracking point 12a, etc., are set by the above-described tracking point set portion 35.

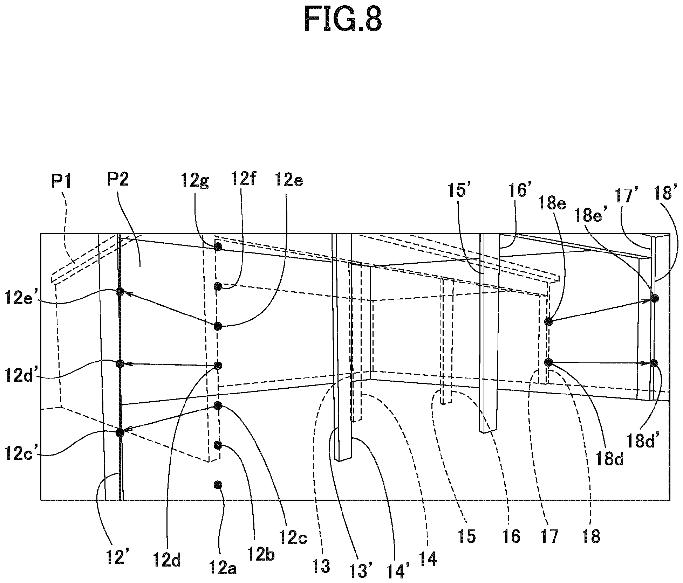

FIG. 8 is a view illustrating the two target images PI, P2 overlapped to each other, the target image P1 with a broken line and the target image P2 with a solid line.

The corresponding point detection portion 36 detects a corresponding point 12a', etc., in the target image P2 (refer to FIG. 7) of the present image time-serially newer than the target image P1 to which the tracking point 12a, etc., is set by the above-described tracking point set portion 35. The corresponding point 12a' corresponds to the tracking point 12a set by the tracking point set portion 35 to the target image P1.

In addition, as the vehicle moves in a time period from a time at which the target image P1 is acquired to a time at which the target image P2 is acquired, the target image P1 and the target image P2 differ to each other.

For example, as illustrated in FIG. 8, in order to detect a corresponding point 12d' in the target image P2, which corresponds to a tracking point 12d in the target image PI, with the corresponding point detection portion 36, a rectangular small region (block) having 81 pixels made from, e.g. vertical 9 pixels × horizontal 9 pixels with the tracking point 12d as the center is set in the target image PI, and with the signal value pattern of the pixels of the small range as a template, the corresponding range having a signal value pattern the same as or similar to the signal value pattern of the small region is detected in the target image P. Then, the pixel representing the center of the corresponding range is detected as the corresponding point 12d'.

As the present embodiment, as the size of the subject image in the targe image P1 may differ from the size of the subject image in the target image P2, and the signal value pattern of the small range set in one target image P1 is small in size in the target image P2, an appropriate corresponding range may not be detected.

In this case, in order to manage the size difference of the subject images in the target images PI, P2, a plurality of templates each having a different size in which the small range is expanded or reduced are set when searching the small range set in the target image P1 in the target image P2. The small range is searched in the target image P2 with a plurality of templates each having a different size, and the corresponding point is detected by appropriately detecting the corresponding range.

The corresponding point detection portion 36 acquires the corresponding points 12a', 12b', 12c', 12e', 12f', 12g' in the target image P2 similar to the tracking point 12d for other tracking points 12a, 12b, 12c, 12e, 12f, 12g set on the longitudinal edge 12.

As illustrated in FIG. 8, when the corresponding point is normally detected, the corresponding points 12a' to 12g' of the tracking point 12a to 12g arranged straight on the longitudinal edge 12 are arranged on the same line. However, as the target image P1 and the target image P2 actually differ, the corresponding point may not present in the target image P2. In this case, relatively similar corresponding points may be detected in positions different from the original corresponding points, and such detected corresponding points may not be arranged on the same line in most cases.

The corresponding point detection portion 36 calculates the average value of the coordinate values of the corresponding points 12a' to 12g in the x direction, which are detected in the target image P2, and determines the corresponding points 12a' to 12g' of which the difference of the coordinate value in the x direction relative to the average value is larger than the previously set threshold as the corresponding point which is not appropriately detected, and deletes such a corresponding point. Thereby, only the corresponding points of which the coordinate value in the x direction is close to the average value remain, and these corresponding points may be arranged on a line extending straight in the vertical direction.

The corresponding point detection portion 36 similarly detects the corresponding point 18d', etc., for other tracking points 18d, set on other longitudinal edges 13, ..., 18, and detects the corresponding point which may be arranged on the line extending straight in the vertical direction.

The longitudinal edge specifying portion 37 specifies the longitudinal edge in the target image P2 in which the corresponding points detected by the corresponding point detection potion 36 are arranged in the vertical direction. More specifically, the longitudinal edge specifying portion 37 specifies the straight line on which the corresponding points 12c', 12d', 12e' are arranged straight as illustrated in FIG. 8 as the longitudinal edge 12' corresponding to the longitudinal edge 12 of the target image P1.

The longitudinal edge specifying portion 37 specifies the longitudinal edges 13' to 18' in the target image P2, which correspond to other longitudinal edges 13 to 18 in the target image P1 similar to the longitudinal edge 12'.

The vehicle position acquisition portion 38 acquires, from the GPS 300, the position of the vehicle in the real space when each of the target images PI, P2 is captured. The storage portion 39 stores the height H of the optical axis of the camera 200 mounted on the vehicle V in the real space.

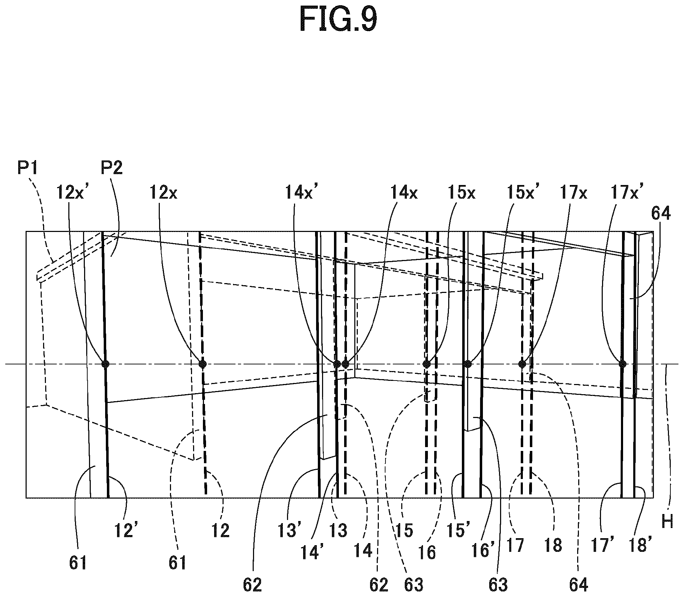

FIG. 9 is a schematic view illustrating intersection points 12x, 12x', ..., 18x, 18x' of the height H of the camera 200 and each longitudinal edge 12, 12', 13, 13', ..., 18, 18' in the target images PI, P2 illustrated in FIG. 8.

As illustrated in FIG. 9, the pillar position detection portion 40 acquires the coordinate positions of the intersection points 12x, 12x', ..., 18x, 18x' of the respective longitudinal edges 12, 12', 13, 13', ..., 18, 18' and the line illustrated by one dot chain line of the height H of the camera 200 stored in the storage portion 39 in each of the target images PI, P2.

In this case, for example, the intersection point 12x is a subject which is the intersection point with the height H of the camera 200 on the longitudinal edge 12 in the target image P1 in the position of the vehicle where the target image P1 is captured. Similarly, the intersection point 12x' is a subject which is the intersection point with the height H of the camera 200 on the longitudinal edge 12' in the target image P2 in the position of the vehicle where the target image P2 is captured. Both of the intersection points 12x, 12x' are images corresponding to the side edges of the pillar 61 which are the same subjects.

The pillar position detection portion 40 acquires the coordinate position of the subject (intersection points 12x, 12x') in the real space with the principle of the triangulation based on the coordinate position of the intersection point 12x which is the specific subject image in the target image P1 captured in the known past position of the vehicle, the coordinate position of the intersection point 12x' which is the image of the same subject in the target image P2 captured in the known present position of the vehicle, and the known past position and the known present position of the vehicle in the real space.

The pillar position detection portion 40 acquires the coordinate position where the acquired coordinate position of the subject in the real space is projected on the road surface in the vertical direction. The acquired coordinate position of the subject projected on the road surface is a position corresponding to the longitudinal edge of the pillar 61 which is the subject in the real space.

The pillar position detection portion 40 also acquires the coordinate positions of the pillars 62 to 63 corresponding to the longitudinal edges 13' to 18' corresponding to other longitudinal edges 13 to 18.

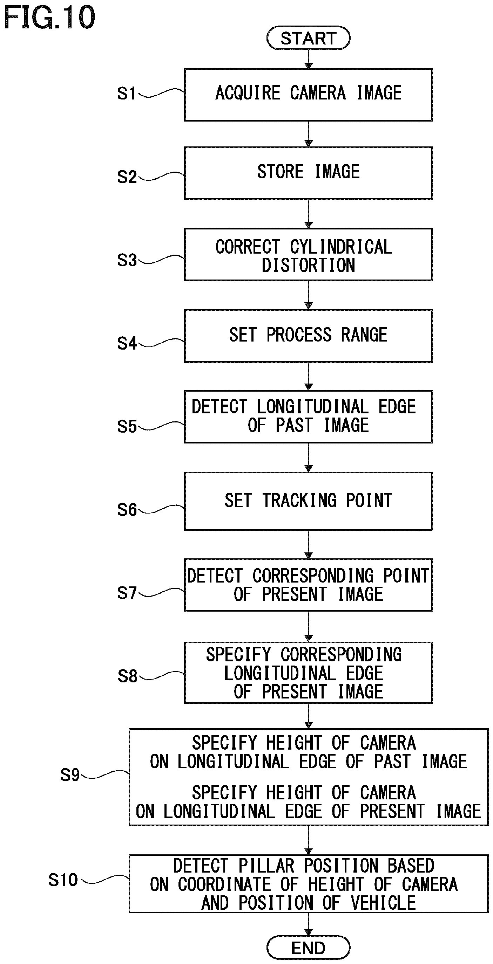

An operation will be described. FIG. 10 is a flowchart describing the flow of the process of the camera ECU 100. The operation of the camera ECU 100 configured as described above will be described with reference to the flowchart illustrated in FIG. 10.

The camera 200 mounted on the vehicle captures an image with a period of about 60 frames per one second (60 fps), and the image storage portion 31 acquires the image captured by the camera 200 (S1 in FIG. 10) and stores the captured image (S2).

Next, the cylindrical distortion correction portion 32 sequentially converts the image stored in the image storage portion into the cylindrical surface image p in which the cylindrical distortion is corrected based on the stored parameter (S3).

The process range set portion 33 sets a part of the cylindrical surface image p as the target image P which is the target range of the subsequent process (S4).

Next, the longitudinal edge detection portion 34 detects the longitudinal edges 12, ..., 18 in the target image P1, which extend in the vertical direction in the real space, based on the target image P1 of the past image (S5).

The tracking point set portion 35 sets the tracking points 12a to 18a to each of the longitudinal edges 12 to 18 (S6)

Next, the corresponding point detection portion 36 detects the corresponding point 12a', etc., in the target image P2 of the present image captured in a timing different from the target image P1 of the past image. Each of the corresponding points 12a' corresponds to each of the tracking points 12a set by the tracking point set portion 35 (S7).

The longitudinal edge specifying portion 37 specifies the longitudinal edge 12', etc., corresponding to the longitudinal edge 12, etc., based on the corresponding point 12a', etc., detected by the corresponding point detection portion 36 (S8).

The longitudinal edge specifying portion 37 specifies the longitudinal edges 13' to 18' in the target image P2, which correspond to other longitudinal edges 13 to 18 in the target image P1, similar to the longitudinal edge 12'.

The pillar position detection portion 40 specifies the coordinate positions of the intersection points 12x, 12x', ..., 18x, 18x' with the heigh H of the camera 200, which are the same subjects between the target images PI, P2, in each of the longitudinal edges 12, 12', 13, 13', ..., 18, 18' in the target images PI, P2 (S9).

The pillar position detection portion 40 detects the coordinate positions of the pillars 61 to 64 in the real space based on the coordinate position of each intersection point 12x, 12x', ..., 18x, 18x' and the coordinate position of the vehicle in the real space, and detects the grounding position where each of the pillars 61 to 64 intersects with the road surface (S 10).

As described above, according to the camera ECU 100 of the present embodiment, the coordinate position of the grounding position where each of the pillars 61 to 64 grounds the road surface in the real space can be specified, and the positional relationship with the vehicle can be specified even for the pillars 61 to 64 of which the corner portions cannot be detected.

Therefore, according to the camera ECU 100 of the present embodiment, the distance between two pillars can be detected with high accuracy. It is also possible to determine whether or not the vehicle can pass between two pillars or the vehicle can park between the two pillars.

The pillar which can be detected by the camera ECU 100 of the present embodiment is not limited to the long thin pillar 62 to 64, and a side end portion of the vertical wall having a longitudinal edge in a side edge can be detected as the pillar 61.

In the camera ECU 100 of the present embodiment, the longitudinal edge specifying portion 37 specifies the longitudinal edge 12, etc., based on the three corresponding points 12c', 12d', 12e'. However, when the longitudinal edge specifying portion 37 specifies the longitudinal edge 12', etc., based on a plurality of corresponding points, it is preferable to specify the longitudinal edge by the majority of the corresponding points (four or more) of the number of tracking points 12a, etc., (seven in this embodiment) set on the corresponding longitudinal edge 12 to improve the reliability. The pillar detection device according to the present disclosure may specify the longitudinal edge based on the number of the corresponding points less than the majority of the set tracking points as the present embodiment.

The camera ECU 100 of the present embodiment uses a part of the cylindrical surface image as the target image to reduce the load of the process by downsizing the process range. However, the pillar detection device according to the present disclosure may use the cylindrical surface image as it is as the process target. Accordingly, the pillar detection device according to the present disclosure may not include the process range set portion 33.

### CROSS-REFERENCE TO RELATED APPLICATION

The present application is based on and claims priority to Japanese Patent Application No. 2019-102581, filed on May 31, 2019, the disclosure of which is hereby incorporated by reference in its entirety.

## Claims

1. A pillar detection device comprising:
a vehicle position acquisition portion configured to acquire a position of a vehicle;
a cylindrical distortion correction portion configured to convert an image captured by a camera mounted on the vehicle into a cylindrical surface image acquired assuming that the image is projected onto a cylindrical surface extending in a vertical direction;
a longitudinal edge detection portion configured to detect a longitudinal edge extending in the vertical direction based on the cylindrical surface image;
a tracking point set portion configured to set a plurality of tracking points arranged along the vertical direction to a longitudinal edge detected by the longitudinal edge detection portion;
a corresponding point detection portion configured to detect, between two images of a first image and a second image captured at time-serially different times by the camera, corresponding points in the cylindrical surface image of the second image, which correspond to the plurality of tracking points set by the tracking point set portion in the cylindrical surface image of the first image;
a longitudinal edge specifying portion configured to specify a longitudinal edge in the cylindrical surface image of the second image in which the corresponding points detected by the corresponding point detection portion are arranged in the vertical direction; and
a pillar position detection portion configured to acquire a grounding position of a pillar having the longitudinal edge based on the longitudinal edge detected in the cylindrical surface image of the first image, the longitudinal edge specified in the cylindrical surface image of the second image, and each position of the vehicle when each of the two images is captured.

2. The pillar detection device according to claim 1, wherein
the pillar position detection portion is configured to detect a position of a common subject in a first coordinate position in the cylindrical surface image of the first image and in a second coordinate position in the cylindrical surface image of the second image based on the first coordinate position corresponding to a height of an optical axis of the camera, the second coordinate position corresponding to the height of the optical axis of the camera, and each position of the vehicle when the two images are captured in the longitudinal edge detected in the cylindrical surface image of the first image, and acquire the grounding position of the pillar where the subject presents.

3. The pillar detection device according to claim 1 or claim 2, further comprising a process range set portion configured to set a predetermined range portion of the cylindrical surface image acquired by correcting with the cylindrical distortion correction portion in the vertical direction, as a target image which is a process target, wherein
the longitudinal edge detection portion and the longitudinal edge specifying portion are configured to detect the longitudinal edge or specify the longitudinal edge to the target image instead of the cylindrical surface image.

4. The pillar detection device according to any one of claims 1 to 3, wherein
the longitudinal edge specifying portion specifies the longitudinal edge based on majority of the corresponding points of the number of the plurality of tracking points set by the tracking point set portion to the longitudinal edge detected by the longitudinal edge detection portion when specifying the longitudinal edge in the cylindrical surface image of the second image in which the corresponding points are arranged in the vertical direction.

5. A pillar detection method comprising:
acquiring a position of a vehicle;
converting an image captured by a camera mounted on the vehicle into a cylindrical surface image acquired assuming that the image is projected onto a cylindrical surface extending in a vertical direction;
detecting a longitudinal edge extending in the vertical direction based on the cylindrical surface image;
setting a plurality of tracking points arranged along the vertical direction to the longitudinal edge;
detecting, between two images of a first image and a second image captured at time-serially different times by the camera, corresponding points in the cylindrical surface image of the second image, which correspond to the plurality of tracking points set in the cylindrical surface image of the first image;
specifying a longitudinal edge in the cylindrical surface image of the second image in which the corresponding points are arranged in the vertical direction; and
acquiring a grounding position of a pillar having the longitudinal edge based on the longitudinal edge detected in the cylindrical surface image of the first image, the longitudinal edge specified in the cylindrical surface image of the second image, and each position of the vehicle when each of the two images is captured.
